# DEMANDE DE BREVET EUROPEEN

(11) **EP 4 206 968 A1**
(43) Date de publication de la demande: **05.07.2023**
(21) Numéro de dépôt: 22216792.6
(22) Date de dépôt: 27.12.2022
(51) Int. Cl.: G06F 21/57, G06F 9/4401

(54) **PROCÉDÉ ET DISPOSITIF DE DÉMARRAGE SÉCURISÉ D'UN SYSTÈME D'EXPLOITATION CLIENT SUR UN SYSTÈME INFORMATIQUE DISTANT**

(30) Priorité: 28.12.2021 FR 2114568
(71) Demandeur: THALES, 92400 Courbevoie (FR)
(72) Inventeur: ROGER, Mickaël, 78141 VELIZY CEDEX (FR)
(74) Mandataire: Lavoix

(57) **Abrégé**

L'invention concerne un procédé et un dispositif de démarrage sécurisé d'un système d'exploitation client sur un système informatique distant, ce démarrage du système d'exploitation client étant effectué en mettant en oeuvre au moins un composant de démarrage d'un ensemble de composants de démarrage. Le procédé comporte un chiffrement (44) de l'image du système d'exploitation client (24), et une transmission au système informatique distant, puis des étapes de modification (42) d'un composant de démarrage (20, 22) par insertion d'instructions de démarrage sécurisé induisant un arrêt temporaire de l'exécution dudit composant de démarrage modifié et une fourniture d'un point de service, de connexion (62) audit point de service et validation d'intégrité (64) dudit au moins un composant de démarrage, et, en cas de validation positive, de fourniture (66) au système informatique distant d'un code de déchiffrement de l'image du système d'exploitation client.

## Description

La présente invention concerne un procédé et un dispositif de démarrage sécurisé d'un système d'exploitation client sur un système informatique distant, fournisseur de services, accessible via un réseau de communication.

L'invention se situe dans le domaine de la sécurité des systèmes informatiques, en particulier pour l'utilisation de systèmes informatiques distants, accessibles via un réseau de communication, e.g. Internet, pour effectuer des services informatiques (stockage, calculs etc).

La fourniture d'infrastructure de dispositifs de calcul et de stockage de données distants est largement développée, connue généralement sous le nom de « cloud computing ». De manière classique, une telle infrastructure est fournie par un fournisseur de services, les dispositifs de calcul étant gérés par le fournisseur de services. Un client, par exemple une entreprise, obtient une quantité de stockage de données et/ou une capacité de calcul, accessibles via un réseau de communication (e.g. Internet), sans toutefois avoir d'accès physique au matériel mis à disposition par le fournisseur de services.

Dans ce contexte, se posent des problèmes accrus de sécurité des données et de risque d'accès aux données ou aux opérations du client par des tiers, qui peuvent être malveillants, le fournisseur de services pouvant lui-même accéder sans autorisation aux données du client bénéficiaire des services fournis.

Diverses solutions ont été proposées pour réaliser du calcul confidentiel, par exemple en utilisant du matériel spécifique ou du logiciel spécifique, par exemple via le contrôle et la gestion d'un hyperviseur.

L'invention se place dans le contexte du démarrage d'un système d'exploitation client sur un système informatique distant, exploité par un fournisseur de services distinct du client, le client n'ayant pas de maîtrise matérielle du système informatique distant. Se pose alors la question de la garantie de l'intégrité du système d'exploitation client démarré sur le système informatique distant, afin de garantir qu'aucun tiers n'ait altéré, sciemment ou non, le système d'exploitation client avant démarrage.

Dans ce cadre, l'invention propose un procédé et un dispositif de démarrage sécurisé, applicable pour tout système informatique distant sans nécessité de maîtriser un élément spécifique, matériel ou logiciel, du système informatique distant.

A cet effet, l'invention propose, selon un aspect, un procédé de démarrage sécurisé d'un système d'exploitation client sur un système informatique distant, fournisseur de services, accessible via un réseau de communication, le démarrage du système d'exploitation client étant effectué par le système informatique distant en mettant en oeuvre au moins un composant de démarrage d'un ensemble de composants de démarrage, l'ensemble de composants de démarrage comprenant au moins un noyau du système d'exploitation à utiliser et une image du système d'exploitation client, le procédé étant mis en oeuvre par un processeur d'un dispositif de démarrage sécurisé. Ce procédé comporte des étapes de chiffrement de l'image du système d'exploitation client, et de transmission de ladite image du système d'exploitation client chiffrée au système informatique distant.

Le procédé comporte en outre des étapes de :
- modification d'un composant de démarrage par insertion d'instructions de démarrage sécurisé, les instructions de démarrage sécurisé induisant un arrêt temporaire de l'exécution dudit composant de démarrage modifié, et une fourniture d'un point de service,
- transmission dudit au moins un composant de démarrage au système informatique distant,
- connexion audit point de service et validation d'intégrité dudit au moins un composant de démarrage chargé par le système informatique distant, et
- en cas de validation positive, fourniture au système informatique distant d'un code de déchiffrement de l'image du système d'exploitation client.

Avantageusement, le procédé de démarrage sécurisé proposé permet une validation de l'intégrité des composants de démarrage qui sont utilisés par le système informatique distant, et qui sont potentiellement modifiables par un tiers. Ainsi, grâce au procédé de l'invention, un démarrage effectif du système d'exploitation client n'est effectué qu'après validation de l'intégrité, ce qui apporte une sécurité accrue.

Le procédé de démarrage sécurisé selon l'invention peut également présenter une ou plusieurs des caractéristiques ci-dessous, prises indépendamment ou selon toutes les combinaisons techniquement envisageables.

La modification d'au moins un composant de démarrage consiste à modifier un composant de démarrage qui est une image de système de fichiers.

Le procédé comporte une génération d'un couple de clés comportant une clé publique et une clé privée, le procédé comportant en outre, lors de la modification d'au moins un composant de démarrage, une insertion de ladite clé publique dans le composant de démarrage.

L'étape de connexion est sécurisée par une méthode d'authentification.

La méthode d'authentification met en oeuvre la clé privée du couple de clés généré et la clé publique insérée dans le composant de démarrage.

Le chiffrement de l'image du système d'exploitation client est effectué avec une clé de chiffrement des données, la clé de chiffrement des données étant chiffrée par une clé de chiffrement de clé.

La clé de chiffrement de clé est obtenue par une combinaison d'un secret et d'une valeur d'intégrité obtenue par application d'une fonction de validation d'intégrité sur au moins un des composants de démarrage.

Le procédé comporte après l'étape de transmission des composants de démarrage au système informatique distant, une requête de démarrage qui initie le démarrage du système d'exploitation client sur un serveur du système informatique distant.

Le procédé comporte en outre des étapes, mises en oeuvre par le système informatique distant, de chargement en mémoire vive dudit serveur des composants de démarrage reçus, et de lecture et exécution desdites instructions de démarrage sécurisé.

La validation d'intégrité met en oeuvre une fonction de validation d'intégrité sur au moins un des composants de démarrage chargés en mémoire vive d'un serveur du système informatique distant, ladite fonction de validation d'intégrité étant un hachage cryptographique.

Le procédé comporte en outre, après réception d'un code de déchiffrement de l'image du système d'exploitation client, un déchiffrement de l'image du système d'exploitation client utilisant ledit code de déchiffrement et une finalisation du démarrage dudit système d'exploitation client.

Selon un autre aspect, l'invention concerne un dispositif de démarrage sécurisé d'un système d'exploitation client sur un système informatique distant, fournisseur de services, accessible via un réseau de communication, le démarrage du système d'exploitation client étant effectué par le système informatique distant en mettant en oeuvre au moins un composant de démarrage d'un ensemble de composants de démarrage, l'ensemble de composants de démarrage comprenant au moins un noyau du système d'exploitation à utiliser et une image du système d'exploitation client. Le dispositif de démarrage comporte au moins un processeur configuré pour mettre en oeuvre un module de chiffrement de l'image du système d'exploitation client, et un module de transmission de ladite image du système d'exploitation client chiffrée au système informatique distant.

Il est configuré en outre pour mettre en oeuvre :
- un module de modification d'un composant de démarrage par insertion d'instructions de démarrage sécurisé, les instructions de démarrage sécurisé induisant un arrêt temporaire de l'exécution dudit composant de démarrage modifié, et une fourniture d'un point de service,
- un module de transmission dudit au moins un composant de démarrage au système informatique distant,
- un module de connexion audit point de service et validation d'intégrité dudit au moins un composant de démarrage chargé par le système informatique distant,
- un module de fourniture, en cas de validation positive, d'un code de déchiffrement de l'image du système d'exploitation client au système informatique distant.

Le dispositif de démarrage sécurisé d'un système d'exploitation client sur un système informatique distant est configuré pour mettre en oeuvre un procédé de démarrage sécurisé d'un système d'exploitation client sur un système informatique distant tel que brièvement décrit ci-dessus, selon tous ses modes de réalisation.

Selon un autre aspect, l'invention concerne un support d'enregistrement d'informations, sur lequel sont mémorisées des instructions logicielles pour l'exécution d'un procédé de démarrage sécurisé tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont exécutées par un dispositif électronique programmable, mettent en oeuvre un procédé de démarrage sécurisé tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 illustre un système de démarrage sécurisé d'un système d'exploitation client sur un système informatique distant selon un mode de réalisation ;
[Fig 2] la figure 2 est un ordinogramme des principales étapes mises en oeuvre dans un système de démarrage sécurisé selon un mode de réalisation.

L'invention sera décrite ci-après dans son application au démarrage sécurisé (en anglais, « secure boot ») d'un système d'exploitation client sur un système informatique distant, fournisseur de services, accessible via un réseau de communication, en particulier Internet.

L'invention permet ainsi de fournir un serveur sécurisé sur le système informatique distant.

Dans le mode de réalisation plus particulièrement décrit ci-dessous, le système d'exploitation utilisé est le système d'exploitation ou OS pour « operating system ») Linux. L'invention s'applique plus généralement avec tout système d'exploitation de type Unix, par exemple BSD (pour « Berkeley Software Distribution »).

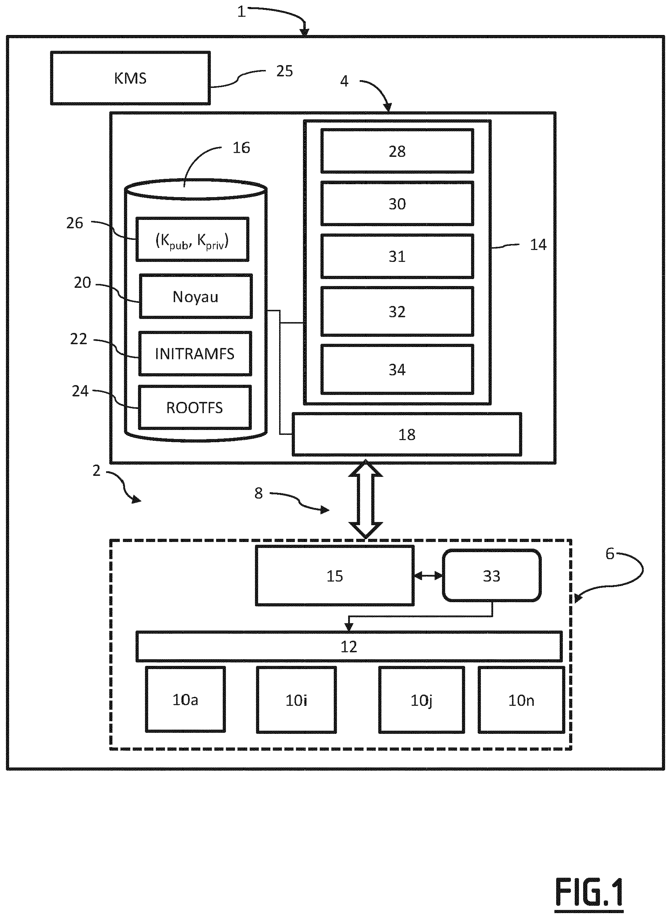

La figure 1 illustre schématiquement un système de démarrage sécurisé 2, lui-même faisant partie d'un système de fourniture distante de ressources informatiques et de services informatiques 1, plus généralement appelé « cloud computing ».

Le système 2 représenté schématiquement à la figure 1 comporte un dispositif de démarrage sécurisé 4 et un système informatique distant 6, adaptés à communiquer via un réseau de communication 8, par exemple le réseau Internet, ou un réseau WAN ou LAN etc.

Le dispositif de démarrage sécurisé 4 est intermédiaire entre un système informatique client (non représenté) et le système informatique distant 6 géré par le fournisseur de services.

En variante, le dispositif de démarrage sécurisé 4 fait partie du système informatique client.

Par la suite, on appelle client un système informatique qui est bénéficiaire du démarrage sécurisé proposé.

On appelle système d'exploitation client le système d'exploitation d'un client, dont l'image est fournie au dispositif de démarrage sécurisé, afin de réaliser le démarrage sécurisé sur le système informatique distant.

Le système informatique distant comporte une pluralité de dispositifs électroniques de calcul et de stockage 10a à 10n, adaptés à communiquer entre eux de manière à mutualiser les ressources de stockage et de calcul.

Dans une variante, le système informatique distant comporte un seul dispositif électronique de calcul et de stockage 10.

Le système informatique distant 6 est géré et contrôlé par un fournisseur de services qui est distinct du client, qui est bénéficiaire d'une partie des ressources logicielles/matérielles mises à disposition par le fournisseur de services.

Le système informatique distant met à disposition un ensemble de fonctionnalités, définies via une interface de programmation ou API 12, permettant de fournir des ressources et des services à une pluralité de clients.

La gestion des ressources matérielles 10a à 10n est effectuée par le fournisseur de services.

Par exemple, une virtualisation des ressources matérielles est mise en oeuvre, le système informatique distant étant adapté pour fournir un ou plusieurs serveurs aux systèmes clients.

L'invention s'applique plus spécifiquement pour le démarrage sécurisé d'un serveur 15 avec le système d'exploitation client sur un serveur fourni par le système informatique distant.

Le dispositif de démarrage sécurisé 4, représenté schématiquement à la figure 1, est dans cet exemple un dispositif électronique programmable.

Le dispositif 4 comporte au moins un processeur de calcul 14, une unité de mémoire électronique 16, une interface 18 de communication avec des dispositifs distants, par un protocole de communication choisi, par exemple un protocole filaire et/ou un protocole de communication radio. Les éléments du dispositif 4 sont adaptés à communiquer via un bus de communication.

Le dispositif 4 est adapté à communiquer notamment avec le système informatique distant 6.

L'unité de mémoire électronique 16 est adaptée pour mémoriser des composants de démarrage du système d'exploitation client, en particulier un noyau du système d'exploitation 20 (en anglais : kernel), une image de système de fichiers 22 (à charger en mémoire vive), également appelé « initramfs » pour « INITial RAM FileSystem » et une image du système d'exploitation client à démarrer 24, également appelée « image du ROOTFS ». Le terme « image » signifie copie fidèle.

Les composant 20, 22, 24 sont des composants initiaux du système d'exploitation client, qui sont d'origine, ou en d'autres termes, intègres.

Optionnellement, l'unité de mémoire électronique 16 mémorise également un couple 26 de clés de chiffrement (K_{pub}, Kₚᵣᵢᵥ), comprenant une clé publique K_{pub} et une clé privée Kₚᵣᵢᵥ, générées par exemple par un système de gestion de clés de chiffrement 25 ou KMS (pour Key Management System).

Le processeur de calcul 14 est configuré pour mettre en oeuvre :
- un module 28 de chiffrement de l'image du système d'exploitation client, en d'autres termes de chiffrement de l'image du ROOTFS ;
- un module 30 de modification d'un composant de démarrage par insertion d'instructions de démarrage sécurisé, les instructions de démarrage sécurisé induisant un arrêt temporaire de l'exécution dudit composant de démarrage modifié, et une fourniture d'un point de service 33,
- un module 31 de transmission de l'image du système d'exploitation client chiffrée et du ou des composants de démarrage au système informatique distant, ces transmissions pouvant être réalisées sensiblement en même temps ou de manière décalée dans le temps,
- un module 32 de connexion au point de service et de validation d'intégrité du au moins un composant de démarrage chargé par le système informatique distant,
- un module 34 de fourniture au système informatique distant d'un code de déchiffrement de l'image du système d'exploitation client, mis en oeuvre en cas de validation d'intégrité positive.

Dans un mode de réalisation, les modules 28, 30, 31, 32, 34 sont réalisés sous forme d'instructions logicielles formant un programme d'ordinateur, qui, lorsqu'il est exécuté par un dispositif électronique programmable, met en oeuvre un procédé de démarrage sécurisé d'un système d'exploitation client sur un système informatique distant selon l'invention.

En variante non représentée, les modules 28, 30, 31, 32, 34 sont réalisés chacun sous forme de composants logiques programmables, tels que des FPGA (de l'anglais *Field Programmable Gate Array*), des microprocesseurs, des composants GPGPU (de l'anglais *General-purposeprocessing on graphies processing*), ou encore de circuits intégrés dédiés, tels que des ASIC (de l'anglais *Application Spécifie Integrated Circuit*).

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnétooptique, une mémoire ROM, une mémoire RAM, tout type de mémoire non-volatile (par exemple EPROM, EEPROM, FLASH, NVRAM), une carte magnétique ou une carte optique.

Des modes de réalisation plus détaillés des modules 28, 30, 31, 32, 34 seront décrits ci-après.

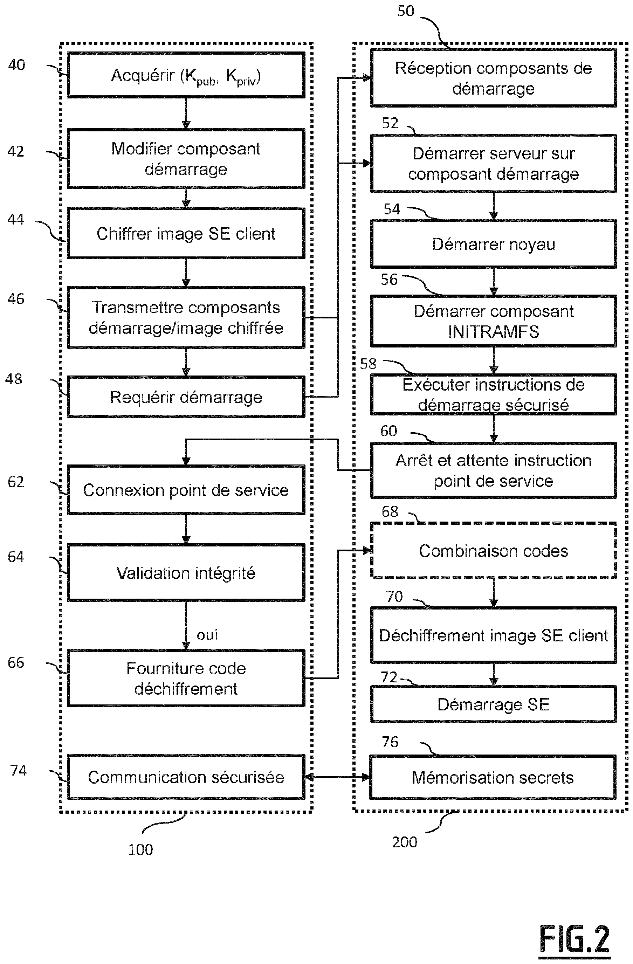

La figure 2 est un ordinogramme des principales étapes mises en oeuvre dans un système de démarrage sécurisé selon un mode de réalisation.

Le procédé comporte d'une part un ensemble 100 d'étapes mises en oeuvre par le dispositif de démarrage sécurisé 4 et d'autre part un ensemble 200 d'étapes mises en oeuvre par le système informatique distant 6.

Dans le mode de réalisation décrit ici, le procédé comporte une étape 40 d'acquisition d'un couple de clés, respectivement une clé publique K_{pub} et une clé privée Kₚᵣᵢᵥ, destinées à être utilisées par une méthode d'authentification, pour le démarrage du système d'exploitation. Le couple de clés est dans ce cas utilisé une seule fois lors de la mise en oeuvre de cette authentification.

Par exemple, la génération du couple de clés met en oeuvre un système de gestion de clés de chiffrement KMS ou un module matériel de sécurité HSM (pour « Hardware Security Module »).

Le procédé comporte ensuite une étape 42 de modification d'un des composants de démarrage du système d'exploitation client.

Dans un mode de réalisation, le composant de démarrage modifié est le composant image de système de fichiers 22, appelé ci-après INITRAMFS.

Selon une variante, le composant de démarrage modifié est le noyau 20 du système d'exploitation.

La modification consiste à ajouter dans le composant de démarrage des instructions de démarrage sécurisé, par exemple sous la forme d'un script exécutable (un jeu d'instructions exécutable) par le système informatique distant.

En variante, les instructions de démarrage sécurisé sont fournies sous forme de code logiciel binaire, dans tout langage lisible par le système informatique distant.

Les instructions de démarrage sécurisé induisent, sur le système information distant, un arrêt temporaire de l'exécution dudit composant de démarrage modifié, et une fourniture d'un point de service en attente d'instructions complémentaires.

Les instructions de démarrage sécurisé sont formulées en fonction de l'API du système informatique distant.

Par exemple, dans un mode de réalisation, une adresse IP (adresse de connexion selon le protocole Internet Protocol) du point de service est fournie et pré-configurée en amont par le client.

Selon une variante, il n'est pas utile d'insérer une adresse IP de point de service, une adresse IP de point de service étant implicitement fournie par le système informatique distant, en utilisant par exemple un mécanisme DHCP (pour « Dynamic Host Configuration Protocol »), protocole réseau chargé de la configuration automatique des adresses IP d'un réseau informatique ou tout mécanisme de configuration d'adresses.

Ces variantes peuvent également être combinées, par exemple par insertion d'instructions relatives à l'utilisation d'un mécanisme de configuration d'adresse.

Outre les instructions de démarrage sécurisé, dans un mode de réalisation, la modification 42 comporte en outre l'insertion, dans le composant de démarrage choisi, d'une information relative à une sécurisation de la connexion au point de service, comprenant par exemple la clé publique K_{pub} préalablement générée.

Le procédé comporte en outre une étape 44 de chiffrement, consistant à générer une l'image du système d'exploitation client (« ROOTFS ») chiffrée. Toute méthode de chiffrement connue à base de clé est utilisable ici.

Par exemple, dans un mode de réalisation, le chiffrement est effectué avec une clé de chiffrement de données (ou DEK pour « Data Encryption Key »), elle-même chiffrée avec clé de chiffrement de clé ou KEK (pour Key Encryption Key »).

Dans un mode de réalisation particulièrement avantageux, la clé KEK est composée à partir d'un secret à usage unique (i.e. à utiliser une seule fois pour le démarrage sécurisé d'un serveur), détenu uniquement par le client, S_KEK, et d'une valeur d'intégrité V_integ calculée à partir des autres composants de démarrage, dont l'intégrité sur le système informatique distant est à vérifier.

Par exemple, dans le cas où le composant de démarrage modifié est le composant INITRAMFS, une fonction de validation d'intégrité, par exemple un hachage cryptographique du noyau et du composant INITRAMFS modifié est appliquée.

Toute fonction de hachage cryptographique peut être choisie, par exemple SHA-256, MD5 etc.

Alors la clé KEK est calculée par combinaison de S_KEK et de V_integ, par exemple par concaténation de ces deux valeurs.

Alternativement, la clé KEK est par exemple uniquement basée sur le secret à usage unique détenu uniquement par le client, S_KEK.

Optionnellement, avant d'effectuer le chiffrement, d'autres informations sont insérées dans l'image du système d'exploitation client (« ROOTFS »), par exemple des certificats privés/publics ou des clés IPSec (« Internet Protocol security »), SSH (« Secure Shell ») pour leur utilisation ultérieure.

Lors d'une étape de transmission 46, les composants de démarrage qui sont le noyau, INITRAMFS, l'un des deux ou les deux ayant été modifié à l'étape 42, et l'image de ROOTFS chiffrée sont transmis au système informatique distant pour le démarrage du système d'exploitation client sur un serveur de ce système informatique distant.

Les composants noyau et INITRAMFS peuvent également être chiffrés/sécurisés pour la transmission, mais la clé de déchiffrement associée est fournie dans ce cas au système informatique distant qui les déchiffre alors avant d'effectuer le démarrage du système d'exploitation client.

Une étape 48 de requête de démarrage du système d'exploitation client est ensuite mise en oeuvre. La requête est formulée selon l'API fournie par le système informatique distant.

Le système informatique distant reçoit les composants de démarrage (étape de réception 50) et reçoit et exécute (étape 52) la requête de démarrage du système d'exploitation client.

De manière classique, le démarrage commence par le chargement en mémoire vive du composant noyau (étape 54) et du composant de démarrage INITRAMFS (étape 56).

Les composants de démarrage ainsi reçus et chargés sur le système informatique distant pourraient être modifiés/altérés de manière intentionnelle ou non. Le procédé de l'invention permet de vérifier que les composants de démarrage exécutés sur le système informatique distant pour démarrer le système d'exploitation client n'ont subi aucune altération avant leur exécution.

Dans le mode de réalisation où le composant de démarrage modifié à l'étape 42 est le composant image de système de fichiers 22 (« INITRAMFS »), le procédé comporte une lecture et exécution 58 des instructions de démarrage sécurisé après le démarrage du INITRAMFS, qui a pour effet un arrêt du démarrage du système d'exploitation client et temporaire de l'exécution dudit composant de démarrage modifié, et une fourniture d'un point de service.

L'adresse IP du point de service est soit indiquée dans les instructions de démarrage sécurisé, soit partagée d'une autre manière avec le dispositif de démarrage sécurisé.

Le système informatique distant arrête l'exécution du démarrage du système d'exploitation client et se met en attente d'instructions complémentaires (étape 60).

Le dispositif de démarrage sécurisé met alors en oeuvre une connexion 62 au point de service et une validation (ou vérification) 64 de l'intégrité des composants de démarrage chargés par le système informatique distant (étapes 54 et 56).

De préférence, la connexion 62 est sécurisée par une authentification du client, ie du logiciel client exécuté par le dispositif de démarrage sécurisé.

Dans un mode de réalisation, la sécurisation de la connexion est effectuée en mettant en oeuvre une méthode d'authentification utilisant le couple de clés K_{pub} et Kₚᵣᵢᵥ, générées à l'étape 40, la clé publique K_{pub} ayant été insérée dans le composant INITRAMFS, et le client disposant de la clé privée Kₚᵣᵢᵥ. La méthode d'authentification consiste alors à vérifier que la clé publique K_{pub} extraite du composant INITRAMFS et la clé privée Kₚᵣᵢᵥ forment effectivement un couple de clés généré par la méthode appliqué à l'étape 40.

Toute autre méthode d'authentification est utilisable, par exemple une authentification par mot de passe. Dans ce mode de réalisation, si l'authentification se fait par mot de passe, une fonction cryptographique (e.g. un hash) du mot de passe est inséré dans le composant de démarrage modifié (étape 42).

Dans l'étape 64 de validation d'intégrité, par exemple une fonction de validation d'intégrité, par exemple une fonction cryptographique telle qu'un hachage, est appliquée aux composants de démarrage chargés en mémoire vive du serveur du système informatique distant, eg le noyau et l'INITRAMFS modifié, tels que reçus.

Toute fonction de hachage cryptographique peut être choisie, par exemple SHA-256, MD5 etc.

La validation d'intégrité consiste à comparer le résultat de la fonction cryptographique appliquée, par exemple de la fonction de hachage, à une valeur de hachage attendue.

En cas de validation d'intégrité positive, en d'autres termes si les composants de démarrage chargés sur le système informatique distants sont inaltérés par rapport aux composants de démarrage transmis, le dispositif de démarrage sécurisé fournit (étape 66) un code de déchiffrement de l'image de ROOTFS chiffrée.

Dans un mode de réalisation, le code de déchiffrement comprend la clé de déchiffrement correspondant à la clé KEK utilisée pour chiffrer la clé de chiffrement de données (ou DEK), la clé DEK chiffrée ayant été transmise par ailleurs au système informatique distant.

Si la clé KEK est formée, comme expliqué ci-dessus, par combinaison d'un secret à usage unique détenu uniquement par le client, S_KEK et d'une valeur d'intégrité V_int, le code de déchiffrement comprend S_KEK, la valeur d'intégrité V_int étant elle-même générée par application de la fonction de hachage utilisée pour vérifier l'intégrité des composants de démarrage. La combinaison de S_KEK et V_int étant effectuée par le système informatique distant (étape 68). Par exemple, les instructions de démarrage sécurisé comprennent des instructions permettant d'effectuer cette combinaison de S_KEK et de V int.

Le système informatique distant met en oeuvre le déchiffrement (étape 70) de l'image de ROOTFS avec la clé de déchiffrement obtenue, et finalise le démarrage du système d'exploitation client (étape 72).

Le procédé de démarrage sécurisé est ainsi complété.

Un fonctionnement entièrement sécurisé est ensuite mis en place.

Par exemple, dans un mode de réalisation, la sécurité est renforcée en utilisant une communication sécurisée (74) avec des certificats de sécurité, le système d'exploitation client mis en oeuvre sur le système informatique distant étant reconnu intègre, donc de confiance (en anglais « trusted »). Notamment, des secrets (clés privées etc) du client peuvent être injectés en mémoire (76) du serveur du système informatique distant.

Le procédé de l'invention a été décrit ici dans un mode de réalisation.

Selon une variante mentionnée ci-dessus, le composant de démarrage modifié est le noyau du système d'exploitation, en l'absence d'utilisation de composant INITRAMFS.

Selon une autre variante de réalisation, l'étape de transmission 46 est modifiée, le procédé comprenant la transmission des composants de démarrage comprenant le composant de démarrage modifié. Dans cette variante de réalisation, l'image de ROOTFS chiffrée sont transmis au système informatique distant est transmise seulement après la vérification d'intégrité 64. Les autres étapes du procédé sont inchangées. Cette variante de réalisation est plus particulièrement utile pour le démarrage sécurisé sur un disque local du système informatique distant.

Avantageusement, le procédé de l'invention permet de réaliser un démarrage sécurisé de système d'exploitation client sur un système informatique distant sans aucun accès physique au système informatique distant.

Avantageusement, l'invention s'applique pour tout fournisseur de systèmes informatiques distants capable d'effectuer des services à distance pour un client, le procédé de démarrage sécurisé étant compatible avec un processus de démarrage de système d'exploitation standard.

L'invention a été décrite ci-dessus plus particulièrement pour des systèmes d'exploitation de type Unix, mais s'applique de manière analogue avec d'autres types de systèmes d'exploitation qui mettent en oeuvre des composants de démarrage.

Avantageusement, l'invention ne met pas en oeuvre d'hyperviseur ou de matériel spécifique, et est donc déployable aisément et avec une limitation des coûts.

## Revendications

1. Procédé de démarrage sécurisé d'un système d'exploitation client sur un système informatique distant (6), fournisseur de services, accessible via un réseau de communication, le démarrage du système d'exploitation client étant effectué par le système informatique distant en mettant en oeuvre au moins un composant de démarrage d'un ensemble de composants de démarrage (20, 22, 24), l'ensemble de composants de démarrage (20, 22, 24) comprenant au moins un noyau (20) du système d'exploitation à utiliser et une image du système d'exploitation client (24), le procédé étant mis en oeuvre par un processeur (14) d'un dispositif de démarrage sécurisé (4) et étant **caractérisé en ce qu'**il comporte des étapes de :
- chiffrement (44) de l'image du système d'exploitation client (24), et
- transmission de ladite image du système d'exploitation client chiffrée au système informatique distant (6),
le procédé comportant en outre des étapes de :
- modification (42) d'un composant de démarrage (20, 22) par insertion d'instructions de démarrage sécurisé, les instructions de démarrage sécurisé induisant un arrêt temporaire de l'exécution dudit composant de démarrage modifié (20, 22), et une fourniture d'un point de service (33),
- transmission (46) dudit au moins un composant de démarrage au système informatique distant (6),
- connexion (62) audit point de service et validation d'intégrité (64) dudit au moins un composant de démarrage chargé par le système informatique distant,
- en cas de validation positive, fourniture (66) au système informatique distant d'un code de déchiffrement de l'image du système d'exploitation client.

2. Procédé selon la revendication 1, dans lequel ladite modification (42) consiste à modifier un composant de démarrage (22) qui est une image de système de fichiers.

3. Procédé selon l'une des revendications 1 ou 2, comportant en outre une génération (40) d'un couple de clés comportant une clé publique (K_{pub}) et une clé privée (Kₚᵣᵢᵥ), le procédé comportant en outre, lors de la modification (42) d'au moins un composant de démarrage (22), une insertion de ladite clé publique (K_{pub}) dans le composant de démarrage (22).

4. Procédé selon l'une des revendications 1 à 3, dans lequel l'étape de connexion (62) est sécurisée par une méthode d'authentification.

5. Procédé selon la revendication 4 dépendant de la revendication 3, dans lequel ladite méthode d'authentification met en oeuvre la clé privée (Kₚᵣᵢᵥ) du couple de clés généré et la clé publique (K_{pub}) insérée dans le composant de démarrage (22).

6. Procédé selon l'une des revendications 1 à 5, dans lequel le chiffrement (44) de l'image du système d'exploitation client est effectué avec une clé de chiffrement des données, la clé de chiffrement des données étant chiffrée par une clé de chiffrement de clé.

7. Procédé selon la revendication 6, dans lequel la clé de chiffrement de clé est obtenue par une combinaison d'un secret et d'une valeur d'intégrité obtenue par application d'une fonction de validation d'intégrité sur au moins un des composants de démarrage (20, 22).

8. Procédé selon l'une des revendications 1 à 7, comportant après l'étape de transmission (46) des composants de démarrage au système informatique distant (6), une requête de démarrage (48) qui initie le démarrage du système d'exploitation client sur un serveur du système informatique distant.

9. Procédé selon la revendication 8, comportant en outre des étapes, mises en oeuvre par le système informatique distant (6), de chargement en mémoire vive dudit serveur (15) des composants de démarrage reçus, et de lecture et exécution desdites instructions de démarrage sécurisé.

10. Procédé selon la revendication 9, dans lequel la validation d'intégrité (64) met en oeuvre une fonction de validation d'intégrité sur au moins un des composants de démarrage (20, 22) chargés en mémoire vive d'un serveur du système informatique distant, ladite fonction de validation d'intégrité étant un hachage cryptographique.

11. Procédé selon la revendication 10, comportant en outre, après réception d'un code de déchiffrement de l'image du système d'exploitation client (24), un déchiffrement (68, 70) de l'image du système d'exploitation client utilisant ledit code de déchiffrement et une finalisation (72) du démarrage dudit système d'exploitation client.

12. Programme d'ordinateur comportant des instructions logicielles qui, lorsqu'elles sont exécutées par un dispositif électronique programmable, mettent en oeuvre un procédé de démarrage sécurisé conforme aux revendications 1 à 11.

13. Dispositif de démarrage sécurisé d'un système d'exploitation client sur un système informatique distant, fournisseur de services, accessible via un réseau de communication (8), le démarrage du système d'exploitation client étant effectué par le système informatique distant (6) en mettant en oeuvre au moins un composant de démarrage d'un ensemble de composants de démarrage (20, 22, 24), l'ensemble de composants de démarrage (20, 22, 24) comprenant au moins un noyau (20) du système d'exploitation à utiliser et une image du système d'exploitation client (24), le dispositif de démarrage comportant au moins un processeur (14) configuré pour mettre en oeuvre :
- un module de chiffrement (28) de l'image du système d'exploitation client (24), et
- un module de transmission de ladite image du système d'exploitation client chiffrée au système informatique distant (6),
et configuré en outre pour mettre en oeuvre :
- un module de modification (30) d'un composant de démarrage (20, 22) par insertion d'instructions de démarrage sécurisé, les instructions de démarrage sécurisé induisant un arrêt temporaire de l'exécution dudit composant de démarrage modifié, et une fourniture d'un point de service,
- un module (31) de transmission dudit au moins un composant de démarrage au système informatique distant (6),
- un module de connexion (32) audit point de service et validation d'intégrité dudit au moins un composant de démarrage (20, 22) chargé par le système informatique distant,
- un module de fourniture (34), en cas de validation positive, d'un code de déchiffrement de l'image du système d'exploitation client (24) au système informatique distant.
